# EUROPÄISCHE PATENTANMELDUNG

(11) **EP 3 761 060 A1**
(43) Veröffentlichungstag der Anmeldung: **06.01.2021**
(21) Anmeldenummer: 20179294.2
(22) Anmeldetag: 10.06.2020
(51) Int. Cl.: G01S 17/04, G01S 17/88

(54) **VORRICHTUNG ZUR ÜBERWACHUNG EINER LAGERHÖHE**

(30) Priorität: 05.07.2019 DE 102019118192
(71) Anmelder: Minimax Viking Research & Development GmbH, 23840 Bad Oldesloe (DE)
(72) Erfinder: Friede, Frank, 23840 Bad Oldesloe (DE); Böke, Joachim, 23840 Bad Oldesloe (DE); Bludau, Stephan, 23840 Bad Oldesloe (DE)
(74) Vertreter: Eisenführ Speiser

(57) **Zusammenfassung**

Die vorliegende Erfindung umfasst eine Vorrichtung (1100) zur Überwachung einer Lagerhöhe (2100) eines Lagers (2000), insbesondere eines Regallagers, bevorzugt eines Hochregallagers, umfassend wenigstens: einen Sensor (1110), der insbesondere dazu vorbereitet ist, in einem oberen Bereich des Lagers (2000) angeordnet zu werden, wobei der Sensor (1110) dazu eingerichtet ist: eine Distanzmessung (Dᵢ, D_{N}) einer im Wesentlichen zum Lager (2000) horizontalen Distanz (Dᵢ, D_{N}) auszuführen, die eine vordefinierte, maximale Lagerhöhe überwacht (2120), und eine Mess- und/oder Steuereinheit (1120), die dazu eingerichtet ist, im Falle einer durch den Sensor (1110) erkannten Überschreitung (Ü) der vordefinierten, maximalen Lagerhöhe (2120) eine Meldung (F,W) auszugeben.

## Beschreibung

Die vorliegende Erfindung betrifft eine Vorrichtung zur Überwachung einer Lagerhöhe sowie eine solche Vorrichtung umfassende Brandbekämpfungsanlage.

Im Bereich der Lagerei werden üblicherweise Lagergüter, also Materialen aller Art, in Lagern und dort freistehend oder auf Regalen untergebracht.

Hierbei kann es dazu kommen, dass die Lagergüter derart im Lager bzw. im Regal untergebracht werden, dass sie eine effiziente Brandbekämpfung behindern, wenn bspw. Kisten so hoch bis unter einen Sprinkler gestapelt werden, dass dieser in seiner Brandbekämpfungseigenschaft eingeschränkt ist.

Um einer solchen, fehlerhaften Bestückung zu begegnen, wird üblicherweise das Lager durch den Betreiber des Lagers nach Augenmaß, zumeist in unregelmäßigen Zeitabständen, überprüft.

Dies kann aber dazu führen, dass trotz aller Sorgfalt des Betreibers ein Brand im Lager ausbricht, während etwaige Lagergüter so gestapelt sind, insbesondere zu hochgestapelt sind, dass sie eine effektive Brandbekämpfung verhindern. Durch die Überschreitung (Ü)der zulässigen Lagerhöhe wird insbesondere die Brandlast erhöht und die Brandbekämpfung verhindert, insbesondere die nötige Löschmittelmenge ist nicht mehr ausreichend.

Aufgabe der vorliegenden Erfindung ist es daher, eines der oben genannten Probleme zu adressieren, den allgemeinen Stand der Technik zu verbessern oder eine Alternative zu bisher Bekanntem bereitzustellen. Insbesondere soll eine automatisierte, effektive Lagerhöhenüberwachung bereitgestellt werden.

Erfindungsgemäß wird somit eine Vorrichtung zur Überwachung einer Lagerhöhe eines Lagers, insbesondere eines Regallagers, bevorzugt eines Hochregallagers, vorgeschlagen, umfassend wenigsten einen Sensor, der insbesondere dazu vorbereitet ist, in einem oberen Bereich des Lagers angeordnet zu werden, wobei der Sensor dazu eingerichtet ist, eine Distanzmessung einer im Wesentlichen zum Lager horizontalen Distanz auszuführen, die eine vordefinierte, maximale Lagerhöhe überwacht, und eine Mess- und/oder Steuereinheit, die dazu eingerichtet ist, im Falle einer durch Sensor erkannten Überschreitung (Ü) der vordefinierten, maximalen Lagerhöhe eine Meldung auszugeben.

Es wird somit eine Vorrichtung vorgeschlagen, die wenigstens einen Sensor und eine Mess- und/oder Steuereinheit aufweist. Das Lager selbst kann bspw. ein freistehendes Lager, ein Paletten-Regallager, ein ein- oder mehrreihiges Ständerlager oder dergleichen sein und bspw. geschlossene oder gelattete Zwischenböden umfassen.

Der Sensor ist somit insbesondere dazu eingerichtet, eine Distanzmessung einer im Wesentlichen zum Lager horizontalen Distanz auszuführen, die eine vordefinierte, maximale Lagerhöhe überwacht.

Der Sensor ist also insbesondere dazu eingerichtet, eine bestimmte, nämlich eine vordefinierte, maximale Lagerhöhe im Lager selbst oder in einem Regal des Lagers zu überwachen.

Die vordefinierte, maximale Lagerhöhe kann auch als zulässige Lagerhöhe bezeichnet werden. Die vordefinierte, maximale Lagerhöhe kann sich aber bspw. auf ein Regal bzw. ein Regalfach beziehen. Bspw. ein Regal mit fünf Fächern, die jeweils eine Höhe von 1 Meter aufweisen, wobei die vordefinierte, maximale Lagerhöhe für das Regalfach im Bereich von etwa - abhängig von der Art und Aufbau der Löscheinrichtung z. B. der Sprinkler, Sprinkleraufbau oder Sprinklerart und Regalaufbau im Bereich von 0,5 bis 0,9 Meter, vorzugsweise 0,8 Meter beträgt. Die vordefinierte, maximale Lagerhöhe resultiert also im Wesentlichen aus einem nötigen (vertikalen) Abstand zur einer Löscheinrichtung, bspw. einem Sprinkler.

Insbesondere ist darauf zu achten, dass unterhalb der Sprühteller von bspw. Dach- und Deckensprinklern folgende Freiräume eingehalten werden sollten:
- ca. 0,5 Meter in LH- und OH-Anlagen, mit Ausnahme bei abgehängten, offenen Decken
- ca. 0,8 Meter bei abgehängten, offenen Decken in LH- und OH-Anlagen
- ca. 1 Meter in HHP- und HHS-Anlagen.

Bei den Regalsprinklern sollte der vertikale Abstand zwischen dem Sprinklersprühteller und der Oberkante des Lagerguts mindestens 150 mm betragen, beim Einsatz von Flachschirmsprinklern kann der Abstand weiter reduziert werden, z. B. auf ca. 100 mm.

Die vorgenannten Kennzeichnungen wie LH, OH, HHS und HHP beziehen sich auf Brandgefahrenklassen und bedeuten im Einzelnen:
LH = Light Hazard (z. B. Büros)
OH = Ordinary Hazard (z. B. Mischbereiche mit Produktion und Lager)
HHS = High Hazard Storage (z. B. reine Lagerbereiche)
HHP = High Hazard Production (z. B. reine Produktionsbereiche).

Die Überwachung der Lagerhöhe kann bspw. dadurch erfolgen, dass der Sensor von der Lagerdecke abgehängt wird oder im Regal oberhalb des Lagergutes angeordnet wird und zwar bevorzugt in einer vordefinierten, maximalen Lagerhöhe.

Auch kann der Sensor an einer Wand des Lagers angebracht werden, von wo aus die vordefinierte, maximale Lagerhöhe überwacht werden kann.

Die vordefinierte, maximale Lagerhöhe wird dabei so gewählt, dass es nicht zu einer Beeinträchtigung der Brandbekämpfung innerhalb des Lagers kommen kann, bspw. 0,5 Meter oder 0,8 Meter oder 1,0 Meter unterhalb eines Sprinklers, insbesondere dessen Sprühtellers. Dieser Abstand kann bspw. abhängig von der Art der Löscheinrichtung bzw. der Brandgefahrenklasse variieren. So ist bspw. 1 Meter bei HSS-Anlagen denkbar und bspw. 0,15 Meter bei Regalsprinklern.

Die Überwachung der vordefinierten, maximalen Lagerhöhe kann dabei mittels Lasers, Schall, Radar oder ähnlichen Sensor-Technologien erfolgen, die dazu ausgelegt sind, eine horizontale Distanz zu erfassen bzw. zu messen.

Ferner weist die Vorrichtung eine Mess- und/oder Steuereinheit auf, die dazu eingerichtet ist, im Falle einer durch den Sensor erkannten Überschreitung (Ü) der vordefinierten, maximalen Lagerhöhe eine Meldung auszugeben.

Der Sensor erfasst also bspw., dass die vordefinierte, maximale Lagerhöhe überschritten ist und leitet dies bzw. einen Wert, der dies indiziert, an die Mess- und/oder Steuereinheit weiter. Die Mess- und/oder Steuereinheit wiederum wandelt das Signal des Sensors in eine Meldung um, bspw. in eine Warnmeldung, die dazu verwendet werden kann, einen Alarm in der Lagerhalle auszulösen.

Vorzugsweise ist der Sensor dazu eingerichtet, eine Laser-Distanzmessung auszuführen.

Der Sensor ist somit bevorzugt als Laser-Sensor ausgebildet, bspw. als Rotationssensor oder Linearsensor.

Besonders vorteilhaft bei Laser-Sensoren ist, eine hohe Messgenauigkeit und die Möglichkeit eine Distanzmessung über weite Distanzen auszuführen.

Dies ist besonders vorteilhaft in weiträumigen Hochregallagern.

Im Falle von Linearsensoren sind ferner eine Vielzahl von solchen Sensoren so im Lager anzuordnen, dass sie ein Netz aufspannen, welches das Lager im Wesentlichen vollständig überwacht.

Auch ist es denkbar einen Laser-Sensor zu verwenden, dessen Laserstrahl mittels eines Spiegels um den Sensor herumgeführt wird. Der Laser-Sensor kann optional auf einer beweglichen Schiene oder auf einem beweglichen Objekt (z. B. eine Drohne) vorgesehen sein.

Vorzugsweise ist der Sensor ein Rotationssensor.

Besonders vorteilhaft hierbei ist, dass bspw. im Falle von kleinen Lagern lediglich ein Sensor mittig im Raum angeordnet werden muss.

Im Falle von weiträumigen Lagern kann es aber zweckmäßig sein, mehrere solcher Rotationsensoren zu verwenden bzw. zu installieren.

Vorzugsweise weist der Sensor wenigstens eine vertikale Achse (V) auf und ist ferner dazu eingerichtet, eine Rotationsbewegung (R) um die vertikale Achse (V) von wenigstens 90°, bevorzugt wenigstens 180°, besonders bevorzugt wenigstens 360°, auszuführen.

Der Sensor ist somit insbesondere dazu eingerichtet, sich um seine bzw. eine Drehachse zu drehen. Bspw. ist der Sensor an einer Wand angeordnet, dann wären wenigstens 180° wünschenswert. Im Falle, dass der Sensor mitten im Raum angeordnet ist, wären wenigstens 360° wünschenswert.

Besonders bevorzugt ist der Sensor dazu eingerichtet, sich mehrfach um seine eigene Achse zudrehen.

Hierfür können bspw. im Sensor Schleifringe vorgesehen sein, die eine Signalübertragung vom Sensorkopf zur Mess- und/oder Steuereinheit ermöglichen.

Besonders vorteilhaft hierbei ist, dass es nicht zu einer Verdrillung etwaiger Kabel kommen kann.

Vorzugsweise weist der Sensor wenigstens eine vertikale Achse (V) auf und ist ferner dazu eingerichtet, eine Rotationsbewegung (R) um die vertikale Achse (V) mit einer vorbestimmten Rotationsgeschwindigkeit auszuführen, die Rotationsgeschwindigkeit liegt etwa im Bereich von 1 bis 90 Umdrehungen pro Minute.

Der Sensor ist somit insbesondere dazu eingerichtet, sich wenigstens innerhalb von 10 Sekunden vollständig um seine eigene Achse zu drehen und gleichzeitig eine Vielzahl von Distanzmessungen auszuführen, bspw. alle 0,5°.

In einer besonders bevorzugten Ausführungsform ist die Rotationsgeschwindigkeit des Sensors einstellbar, bspw. zwischen 360° pro 60 Sekunden und 360° pro 2 Sekunden.

Besonders bevorzugt kann der Sensor mit einer einstellbaren Abtastrate parametriert werden. Bspw. Messungen alle 5° bei 1 Umdrehung pro Minute.

Vorzugsweise ist die Mess- und/oder Steuereinheit ferner dazu eingerichtet ist, im Falle einer durch den Sensor erkannten Überschreitung (Ü) (Ü) der vordefinierten, maximalen Lagerhöhe einen zur Meldung (F, W) dazugehörigen Zeitstempel bereitzustellen.

Die Mess- und/oder Steuereinheit ist somit insbesondere dazu eingerichtet, zu jeder erkannten Überschreitung (Ü) einen Zeitstempel zu vergeben.

Hierdurch ist es bspw. möglich, die Meldung des Sensors anhand der Zeitstempel zu differenzieren, bspw. in eine Fehlermeldung und in eine Warnmeldung.

Wenn bspw. der Sensor zu einem ersten Zeitpunkt eine Überschreitung (Ü) erkennt und zu einem zweiten Zeitpunkt nicht mehr, bspw. 5 Sekunden später, dann kann davon ausgegangen werden, dass es sich nur um eine kurzfristige Überschreitung (Ü) der vordefinierten, maximalen Lagerhöhe handelt bspw., dass ein Stapler durch die Distanzmessung gefahren ist. In diesem Falle kann dann bspw. eine Fehlermeldung in einem Speicher abgelegt werden, die eine kurzfristige Störung der Distanzmessung protokolliert.

In einem anderen Fall erkennt der Sensor zu einem ersten Zeitpunkt eine Überschreitung (Ü) und zu einem zweiten Zeitpunkt ebenfalls, bspw. 10 Sekunden später, dann kann davon ausgegangen werden, dass Lagergüter so im Lager angeordnet worden sind, dass sie die vordefinierte, maximale Lagerhöhe überschreiten und somit eine effektive Brandbekämpfung nicht mehr mögliche ist. In diesem Falle kann dann bspw. eine Warnmeldung ausgelöst werden, die dazu verwendet werden kann, einen akustischen und/oder optischen Alarm im Lager auszulösen, der darauf hinweist, dass die zulässige Lagerhöhe überschritten ist.

In einer besonders bevorzugten Ausführungsform werden hierfür auch Positionen, wie bspw. Drehwinkel, in einem Register der Mess- und/oder Steuereinheit hinterlegt.

Hierdurch ist es möglich, dass das Personal des Lagers durch Auslesen eines Registers, bspw. an einem Bildschirm der erfindungsgemäßen Vorrichtung am Bildschirm der damit verbunden ist, feststellen kann, ob und/oder wo und/oder wann und/oder in welcher Weise die Überschreitung (Ü) der zulässigen Lagerhöhe vorliegt.

Vorzugsweise weist die Vorrichtung ein mit der Mess- und/oder Steuereinheit verbundenes Register auf, welches dazu gerichtet ist, durch den Sensor erfasste Daten abzuspeichern, insbesondere um die Vorrichtung innerhalb des Lagers erstmalig zu initialisieren und außerdem oder alternativ um eine aktuelle Distanz mit einer vorherigen Distanz und außerdem oder alternativ mit einer initialisierten Distanz abzugleichen.

Es wird also insbesondere vorgeschlagen, einen Ist-Wert mit einem Soll-Wert abzugleichen und bei einer Abweichung einen Fehler und insbesondere eine fehlerhafte Bestückung des Lagers festzustellen.

Die Vorrichtung umfasst somit auch ein Register, welches mit der Mess- und/oder Steuereinheit verbunden ist und bevorzugt Bestandteil der Mess- und/oder Steuereinheit sein kann. Das Register kann in der Vorrichtung zur Überwachung einer Lagerhöhe oder extern z. B. auf eine Cloud ferner vorgesehen sein.

Das Register ist dabei insbesondere dazu vorgesehen, verschiedenste Werte für vorbestimmte Distanzen abzuspeichern und diese unter Umständen bei Zuhilfenahme einer Recheneinheit, eines Prozessors eines Computers etc. zu vergleichen, bspw. unter Verwendung von Drehwinkeln und Zeitstempeln.

Bevorzugt wird das Register ferner im einem ersten Schritt initialisiert, insbesondere in einem freigestellten und/oder zulässig gestapelten Lager.

Hierdurch ist die Vorrichtung insbesondere dazu eingerichtet, zwischen kurzweiligen Störungen, die bspw. durch Stapler verursacht werden, die durch das Lager fahren, und einer fehlerhaften Bestückung des Lagers, also eine zu hohe Bestückung eines Regals, zu unterscheiden.

Vorzugsweise ist die Mess- und/oder Steuereinheit ferner dazu eingerichtet, mittels des Registers einen Alarm, insbesondere mittels einer im Lager befindlichen (optischen) Alarmeinheit, z. B. einer Blitzleuchte, auszulösen und/oder ein Signal, z. B. ein Datensignal, kabelgebunden oder kabellos z. B. an ein externes Gerät auszugeben.

Die Mess- und/oder Steuereinheit kann somit insbesondere mittels eines Datenabgleiches mit dem Register eine zu hohe Bestückung des Lagers feststellen.

Der Alarm, der durch die Mess- und/oder Steuereinheit ausgelöst wird, kann dabei optisch und/oder akustisch sein.

Bspw. mittels einer Blitzleuchte die im Lager angeordnet ist.

Vorzugsweise umfasst die Vorrichtung ferner eine optische Alarmeinheit, insbesondere eine Blitzleuchte, die dazu eingerichtet ist, eine Meldung, bevorzugt eine Warnmeldung, der Mess- und/oder Steuereinheit, innerhalb eines Lagers als optisch-sichtbaren Alarm auszugeben.

Die Vorrichtung umfasst somit insbesondere eine Blitzleuchte, die bspw. ein rotes Licht, blitzend im Lager ausgeben kann.

Vorzugsweise umfasst die erfindungsgemäße Vorrichtung ferner eine Schnittstelle, die dazu eingerichtet ist, Daten zwischen der Mess- und/oder Steuereinheit und einer Zentrale auszutauschen, wobei die Schnittstelle bevorzugt als Kommunikationseinheit ausgeführt ist, welche dazu eingerichtet ist, Signale an einen Computer oder an einen Cloudserver zu übertragen, bevorzugt an ein mobiles Endgerät eines Lagerarbeiters.

Soweit in der vorliegenden Anmeldung eine Zentrale erwähnt ist, ist damit unter anderem auch Sprinklerüberwachungszentrale und/oder eine Brandmelderzentrale und/oder Löschsteuerzentrale und/oder Störmeldezentrale gemeint sowie Abwandlungen hiervon.

Vorzugsweise umfasst die erfindungsgemäße Vorrichtung neben der Mess- und Steuereinheit ferner eine Kommunikationseinheit, die dazu eingerichtet ist, Daten an eine weitere Einrichtung, insbesondere eine Zentrale und/oder einen Computer und/oder einen Cloudserver und/oder ein mobiles Endgerät zu übertragen.

Die erfindungsgemäße Vorrichtung umfasst somit insbesondere eine Schnittstelle, bspw. einen Datenbus, mittels derer die Vorrichtung mit anderen Brandschutzeinrichtungen, wie bspw. einer Sprinklerüberwachungszentrale oder einer Brandmelder- und/oder Löschsteuerzentrale, kommunizieren kann.

Die Schnittstelle kann aber auch als Kommunikationseinheit ausgebildet sein, die bspw. dazu eingerichtet ist, die Daten der Mess- und/oder Steuereinheit zu empfangen und diese oder ein daraus resultierendes Signal an Dritte weiterzugeben. Der Dritte kann bspw. die Sprinklerüberwachungszentrale (oder eine andere Zentrale) sein oder eine externe Fernüberwachung, wie bspw. eine Cloud, ein Cloudserver oder ein Computer. Die Cloud bzw. der Cloudserver, zum Beispiel die dort abgelegten/abgespeicherten Daten, Informationen etc. wiederum kann bevorzugt mittels eines Mobiltelefons ab- und angerufen werden. Die Kommunikationseinheit ist somit auch dazu eingerichtet, einen Alarm oder eine fehlerhafte Bestückung des Lagers an eine Cloud, einen Cloudserver, einen Computer oder ein Mobiltelefon, zum Beispiel eines Lagerarbeiters, zu versenden.

Eine Kommunikationseinheit kann dabei verschiedene Übertragungswege und -mittel nutzen, zum Beispiel ein Kabel, ein Funkmodul (LORA, ISM-Band 433 MHz Region 1 und/oder SRD-Band 868 MHz Europa). Eine Kommunikationseinheit kann somit auch ein Kabel oder ein Übertragungsmodul sein, in dem die Daten an einen gewünschten Anschluss, eine Zieladresse oder dergleichen zu übertragen sind.

Vorzugsweise umfasst die Vorrichtung ferner ein durch die Mess- und/oder Steuereinheit ausführbares Computerprogramm-Produkt, welches Befehle umfasst, die bei deren Ausführung auf einem Computer, den Sensor dazu veranlassen, die Distanzmessung auszuführen und eine erkannte Überschreitung (Ü) unter Verwendung wenigstens zweier Zeitstempel zu differenzieren, insbesondere nach einer Fehlermeldung und Warnmeldung.

Die Vorrichtung umfasst somit auch eine Software, die bspw. durch die Mess- und/oder Steuereinheit ausgeführt werden kann oder einen anderen Computer, der Bestandteil der Vorrichtung ist.

Durch diese Software kann der Sensor bewegt, z. B. gedreht und/oder eingestellt werden und außerdem oder alternativ differenziert werden, ob die Messung des Sensors nur kurzzeitig gestört ist, bspw. durch einen durch das Lager fahrenden Stapler, oder eine fehlerhafte Bestückung des Lagers, insbesondere eine zu hohe Bestückung eines Regals, vorliegt.

Der Sensor nimmt dabei in vorbestimmten Intervallen eine entsprechende Messung vor, die dann entsprechend ausgewertet wird.

Bei Ausbildung des Sensors als Rotationssensor, kann der Sensor dabei permanent oder in einem vorbestimmten Intervall drehend ausgeführt sein, oder manuell ausgelöst werden, bspw. durch Betriebspersonal des Lagers.

Erfindungsgemäß wird ferner eine Brandbekämpfungsanlage, insbesondere eine Wasserlöschanlage für ein Lager, vorgeschlagen, wobei die Brandbekämpfungsanlage wenigstens ein Löschfluidauslass umfasst, insbesondere eine Düse und/oder einen Sprinkler oder eine vorbeschriebene Vorrichtung zur Überwachung der Lagerhöhe.

Das Lager ist bevorzugt ein freistehendes Lager, ein Paletten-Regallager, ein ein- oder mehrreihiges Ständerlager oder dergleichen sein und bspw. geschlossene oder gelattete Zwischenböden umfassen.

In einer bevorzugten Ausführungsform ist die Brandbekämpfungsanlage eine Sprinkleranlage.

Ferner bevorzugt wird der Sensor der erfindungsgemäßen Vorrichtung dann außerhalb der bzw. des Wurfkegels des bzw. der Sprinkler der Sprinkleranlage angeordnet.

Vorzugsweise umfasst die Brandbekämpfungsanlage eine Zentrale, die mit vorstehenden oder nachstehenden beschriebenen, erfindungsgemäßen Vorrichtungen verbunden ist, um einen Alarm, eine Warnung oder dergleichen auszulösen, insbesondere mittels einer Blitzleuchte.

Die Zentrale kann, wie erwähnt, als Sprinklerüberwachungszentrale und/oder Brandmeldezentrale und/oder Löschsteuerzentrale und/oder Störmeldezentrale ausgeführt sein.

Der beschriebene Alarm kann dabei auch eine optische oder akustische oder haptisch wahrnehmbare Störung/Warnung sein.

Erfindungsgemäß wird ferner vorgeschlagen, die vorstehend oder nachstehend beschriebene Vorrichtung zur Überwachung einer Lagerhöhe eines Lagers in einer Brandbekämpfungsanlage zu verwenden.

Schließlich wird die Zentrale einer Brandbekämpfungsanlage vorgeschlagen, die der erfindungsgemäß vorstehend beschriebenen Vorrichtung zugeordnet ist, um im Bedarfsfall, z. B. dann, wenn eine Überschreitung Ü der vordefinierten, maximalen Lagerhöhe erkannt wird, eine Meldung oder einen Alarm oder eine Störung oder eine Warnung oder dergleichen über ein entsprechendes Anzeigemittel auszugeben.

Zentrale einer Brandbekämpfungsanlage nach einem der vorstehenden Ansprüche, wobei der Zentrale eine Vorrichtung nach einem der Ansprüche 1 bis 11 zugeordnet ist, um einen Alarm, eine Störung oder Warnung oder dergleichen auszulösen.

Die vorliegende Erfindung wird nun nachfolgend exemplarisch anhand von Ausführungsbeispielen unter Bezugnahme auf die begleitenden Figuren näher erläutert, wobei für funktionsgleiche Bauteile, dieselben Bezugszeichen verwendet werden.
- Fig. 1: zeigt eine schematische Ansicht einer erfindungsgemäßen Brandbekämpfungsanlage umfassend eine erfindungsgemäße Vorrichtung zur Überwachung einer Lagerhöhe in einem Lager,
- Fig. 2: zeigt eine schematische Draufsicht auf einen Sensor einer erfindungsgemäßen Vorrichtung zur Überwachung einer Lagerhöhe in einem Lager und
- Fig. 3: zeigt schematisch eine Funktionsweise der Mess- und/oder Steuereinheit einer erfindungsgemäßen Vorrichtung zu Überwachung einer Lagerhöhe, insbesondere den Abgleich zweier Distanzmessungen.

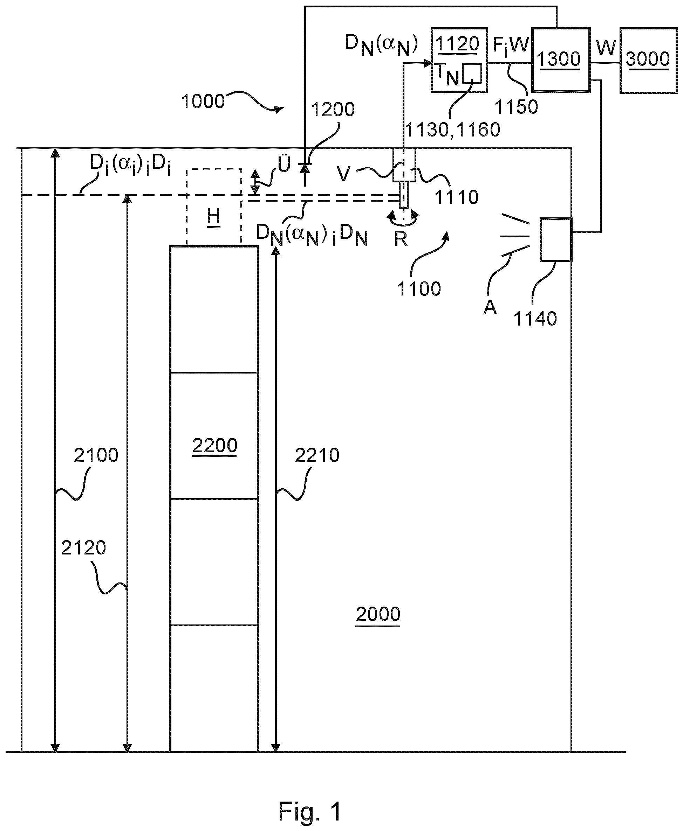

Fig. 1 zeigt eine schematische Ansicht einer erfindungsgemäßen Brandbekämpfungsanlage 1000 umfassend eine erfindungsgemäße Vorrichtung 1100 zur Überwachung einer Lagerhöhe eines Lagers 2000, wobei das Lager 2000 eine maximale Lagerhöhe 2100 und eine vordefinierte, maximale Lagerhöhe 2120 aufweist und ferner ein Regal 2200 mit einer Regalhöhe 2210 umfasst.

Die maximale Lagerhöhe 2100 ist baulich bedingt und richtet sich nach der Ausgestaltung des Lagers 2000, insbesondere der Deckenhöhe oder Regalhöhe des Lagers.

Die vordefinierte, maximale Lagerhöhe 2120 richtet sich nach der Ausgestaltung der Löschanlage, insbesondere des Sprinklers 1200.

Üblicherweise ist die vordefinierte, maximale Lagerhöhe 2120 zwischen der maximalen Lagerhöhe 2100 und der Regalhöhe 2210, wobei die Regalhöhe 2210 kleiner ist als die maximale Lagerhöhe 2100.

Die Brandbekämpfungsanlage 2000 umfasst dabei im Wesentlichen die Vorrichtung zur Überwachung einer Lagerhöhe 1100, einen Sprinkler 1200 und eine Zentrale 1300. Die Zentrale 1300 ist vorzugsweise als Sprinklerüberwachungszentrale ausgeführt, die mit einer Brandmelde- und/oder Löschsteuerzentrale 3000 verbunden ist. Es ist aber auch möglich, dass die Brandbekämpfungsanlage 2000 direkt mit einem Cloudserver verbunden ist.

Die Vorrichtung zur Überwachung der Lagerhöhe 1100 umfasst einen Rotationssensor 1110, eine Mess- und/oder Steuereinheit 1120, ein Register 1130, eine Blitzleuchte 1140, eine Schnittstelle 1150 und ein Computerprogramm-Produkt 1160.

Der Rotationssensor 1110 ist dazu eingerichtet, in einem oberen Bereich des Lagers 2000 angeordnet zu werden, also bspw. unterhalb einer Lagerdecke oder oberhalb des Regals 2200 bzw. oberhalb der Regalhöhe 2210.

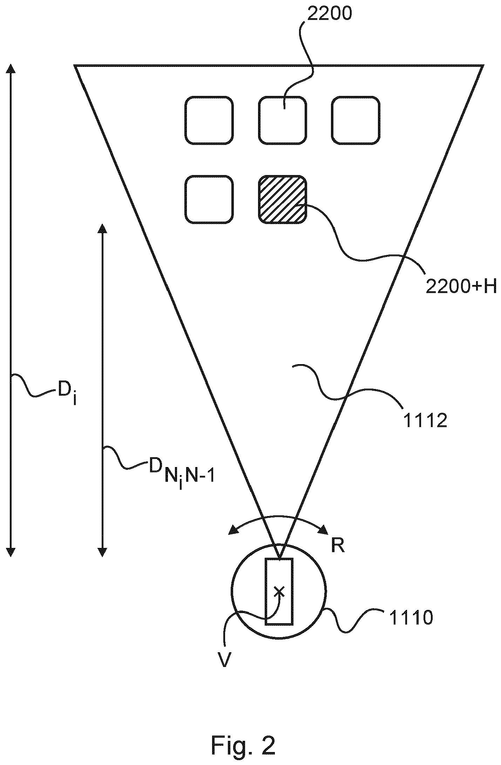

Ferner ist der Rotationssensor 1110 dazu eingerichtet, mit einer Laser-Distanzmessung zu arbeiten und eine Distanzmessung Dᵢ(αi), D_{N}(α_{N}) einer im Wesentlichen zum Lager 2000 horizontalen Distanz Dᵢ, D_{N} auszuführen, die eine vordefinierte, maximale Lagerhöhe überwacht 2120, insbesondere so wie in Fig. 2 gezeigt.

Hierfür weist der Rotationssensor 1110 wenigstens eine vertikale Achse (V) auf und ist ferner dazu eingerichtet, eine Rotationsbewegung (R)um die vertikale Achse (V) von wenigstens 360° auszuführen.

Der Rotationssensor 1110 ist somit dazu eingerichtet, das gesamte Lager 2000 in einer Ebene zu vermessen, in der die Distanzmessung Dᵢ(αi), D_{N}(α_{N}) ausgeführt wird.

In einer bevorzugten Ausführungsform weist der Rotationssensor 1110 beispielsweise wenigstens eine Rotationsgeschwindigkeit von 360° pro 10 Sekunden auf.

Die Mess- und/oder Steuereinheit 1120 ist ferner dazu eingerichtet, im Falle einer durch den Rotationssensor 1110 erkannten Überschreitung (Ü) der vordefinierten, maximalen Lagerhöhe 2120 eine Meldung F, W auszugeben.

Hierfür ist die Mess- und/oder Steuereinheit 1120 ebenfalls dazu eingerichtet, im Falle einer durch den Rotationssensor 1110 erkannten Überschreitung (Ü) der vordefinierten, maximalen Lagerhöhe 2120 einen zur Meldung F, W dazugehörigen Zeitstempel T_{N} bereitzustellen.

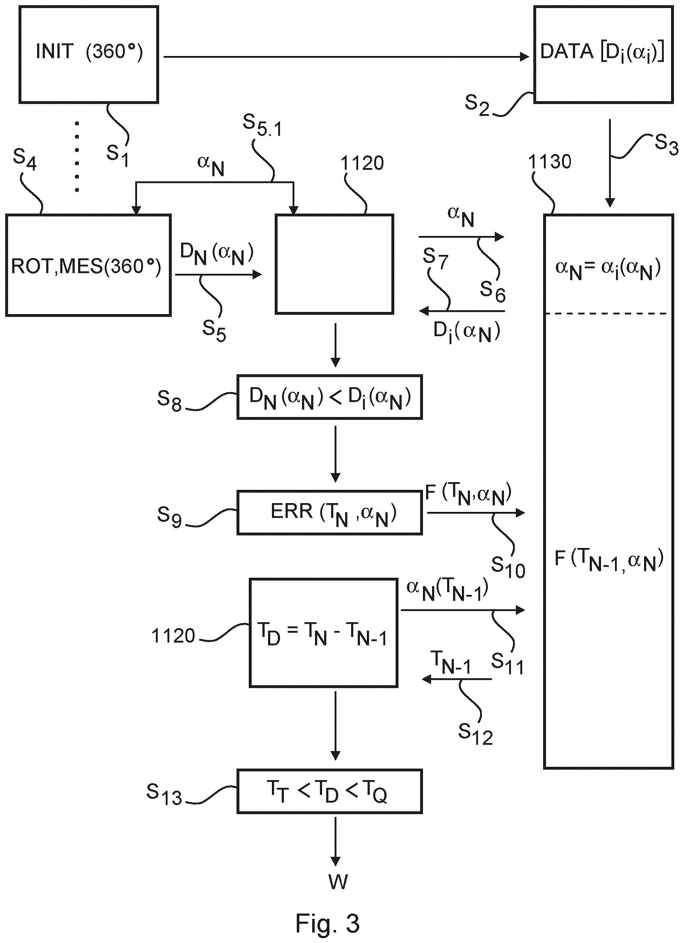

Ferner ist die Mess- und/oder Steuereinheit 1120 mit dem Register 1130 verbunden, welches dazu gerichtet ist, durch den Rotationsensor 1110 erfasste Daten abzuspeichern, insbesondere um die Vorrichtung innerhalb des Lagers erstmalig zu initialisieren und außerdem oder alternativ um eine aktuelle Distanz D_{N} mit einer vorherigen Distanz D_{N-1} und außerdem oder alternativ mit einer initialisierten Distanz Dᵢ abzugleichen. Eine Möglichkeit dies Abgleiches ist nachstehend an Fig. 3 erläutert.

Zudem ist die Mess- und/oder Steuereinheit 1120 über die Schnittstelle 1150 mit der Sprinklerüberwachungszentrale 1300 und somit mit der Blitzleuchte 1140 direkt oder indirekt verbunden, um einen optischen Alarm A auszulösen.

Die Blitzleuchte 1140 ist somit auch wenigstens dazu eingerichtet, eine Meldung F, W, bevorzugt eine Warnmeldung W, der Mess- und/oder Steuereinheit 1120 innerhalb eines Lagers 2000 als optisch-sichtbaren Alarm A auszugeben.

Ferner ist die Schnittstelle 1150 somit wenigstens dazu eingerichtet, Daten zwischen der Mess- und/oder Steuereinheit mit einer Zentrale 1300 außerdem oder alternativ dazu mit einer Brandmelder- und/oder Löschsteuerzentrale 3000 auszutauschen und einer Sprinklerüberwachungszentrale 1300 und außerdem oder alternativ einer Brandmelder- und/oder Löschsteuerzentrale 3000 und/oder einem Cloudserver/-betreiber auszutauschen.

Eine Alternative dieser Lösung ist eine Ausführungsform, bei welcher die Mess- und/oder Steuereinheit 1120 eine Kommunikationseinheit aufweist, die dazu eingerichtet ist, die Daten der Mess- und/oder Steuereinheit 1120 an eine weitere Einrichtung, insbesondere eine Zentrale und/oder einen Computer und/oder einen Cloudserver und/oder ein mobiles Endgerät zu übertragen. Werden die Daten der Mess- und/oder Steuereinheit 1120 mittels der Kommunikationseinheit zum Beispiel an den Computer und/oder Cloudserver übertragen, werden in diesen Einheiten die entsprechenden Vergleiche zwischen Neuwerten und Istwerten vorgenommen und bei überschreiten bestimmter Werte wird dann ein wie beschriebener Alarm ausgelöst. Die vorbeschriebene Lösung kann dabei eine klassische Zentrale wie eine Sprinklerzentrale ersetzen oder sie ergänzen, indem bestimmte Vergleiche und Rechenoperationen in dem Computer und/oder Cloudserver vorgenommen werden und die Ergebnisse der Zentrale zur Verfügung gestellt werden, um entsprechende Maßnahmen wie zum Beispiel das Auslösen eines Alarms vorzunehmen. Die Ausbildung der Schnittstelle 1150 hängt mithin maßgeblich auch davon ab, welcher technischen Einheit die Daten zur Verfügung gestellt werden sollen, zum Beispiel der Zentrale 1300 oder der Brandmelder- und/oder Löschsteuerzentrale 3000 oder Cloudserver, der Cloud oder einem Computer oder dergleichen und die Schnittstelle ist auf den jeweiligen Bedarfs- und Anwendungszwecks optimiert und angepasst.

Zudem umfasst die Vorrichtung 1100 ein durch die Mess- und/oder Steuereinheit 1120 ausführbares Computerprogramm-Produkt 1160, umfassend Befehle, die bei deren Ausführung auf einem Computer: den Rotationssensor 1110 dazu veranlassen, eine Rotationsbewegung (R) um die vertikale Achse (V) auszuführen und eine erkannte Überschreitung (Ü) unter Verwendung wenigstens zweier Zeitstempel T_{N}, T_{N-1} zu differenzieren, insbesondere nach Fehlermeldung F und Warnmeldung W.

Fig. 2 zeigt eine schematische Draufsicht auf einen Sensor 1110 einer erfindungsgemäßen Vorrichtung 1100 zur Überwachung einer Lagerhöhe in einem Lager 2000, bevorzugt wie in Fig. 1 gezeigt.

Der Rotationssensor 1110 ist unterhalb einer Decke eines Lagers angeordnet und dazu eingerichtet, eine Rotationsbewegung (R) auszuführen.

In einem ersten Schritt wurde das Lager in einem freigestellten Zustand vermessen und eine initialisierte Distanz Dᵢ abgespeichert.

Im laufenden Betrieb dreht sich der Rotationssensor 1110 um seine vertikale Achse (V) und führt dabei wiederkehrende Distanzmessungen D_{N}, D_{N-1} während seiner Rotation aus.

Die so erhaltenen Wert der Distanzmessung D_{N}, D_{N-1} werden mit der initialisierten Distanz Dᵢ abgeglichen.

Sofern der erhaltene bzw. aktuelle Wert D_{N} kleiner ist als die initialisierten Distanz Dᵢ liegt zunächst eine Fehlermeldung für einen Drehwinkel α_{N} vor.

Dieser Wert kann ferner mit vorherigen Distanzmessungen D_{N-1} abgeglichen werden.

Stand die Fehlermeldung zuvor schon einmal an, bspw. eine Umdrehung des Rotationssensors vorher, so kann darauf geschlossen werden, dass in Drehwinkelrichtung α_{N} ein Regal 2200 eine verkehrte bzw. zu hohe Lagerung aufweist, also ein Hindernis H für die Brandbekämpfungsanlage.

Dementsprechend wird eine Warnmeldung W generiert, die bspw. eine Sprinklerüberwachungszentrale versandt wird.

Fig. 3 zeigt schematisch eine Funktionsweise der Mess- und/oder Steuereinheit einer erfindungsgemäßen Vorrichtung zur Überwachung einer Lagerhöhe, wie bevorzugt in Fig. 1 gezeigt, insbesondere wird der Abgleich zweier Distanzmessungen D_{N}, D_{N-1} gezeigt.

Zunächst wird in einem ersten Schritt S1 das freigestellte Lager vermessen. Hierfür dreht sich bspw. der Rotationssensor einmal vollständig um 360° und sammelt für jeden Rotationswinkel αᵢ eine entsprechende Distanz Dᵢ.

Hierdurch wird ein entsprechender Datensatz [Dᵢ(αᵢ)] gewonnen, was durch Schritt S2 angedeutet ist.

Die so gewonnenen Daten werden anschließend im Register 1130 hinterlegt, was durch den Schritt S3 angedeutet ist.

Die Verfahrensschritte S1 bis S3 bilden somit die eigentliche Initialisierung des Rotationssensors aus.

Anschließend kann der Rotationssensor regulär in den Betrieb genommen werden, was durch Verfahrensschritt S4 angedeutet ist. Hierbei dreht sich der Rotationssensor um seine eigene Achse und vermisst das Lager.

Die so erhaltenen Distanzen D_{N}(α_{N}) werden an die Mess- und/oder Steuereinheit 1120 übergeben. Dies ist durch Verfahrensschritt S5 angedeutet.

In einer Ausführungsform übergibt der Rotationssensor zusätzlich seinen Drehwinkel α_{N}, in einer anderen Ausführungsform wird der Drehwinkel α_{N} durch die Mess- und/oder Steuereinheit 1120 beim Rotationssensor abgefragt bzw. aus Steuerdaten abgeleitet. Dies ist durch Verfahrensschritt S5.1 angedeutet.

Die Mess- und/oder Steuereinheit 1120 fragt im Register für den entsprechenden Drehwinkel α_{N} den initialisierten Wert αᵢ ab, wobei dieser demselben Drehwinkel entspricht, also αᵢ(a_{N}). Dies ist durch Verfahrensschritt S6 angedeutet.

Aus dem Register 1130 erhält die Mess- und/oder Steuereinheit eine entsprechende Distanz Dᵢ(α_{N}). Dies ist durch Verfahrensschritt S7 angedeutet.

Die Mess- und/oder Steuereinheit 1120 vergleicht hieraufhin die gemessene Distanz D_{N}(α_{N}) mit dem initialisierten Wert Dᵢ(α_{N}). Dies ist durch Verfahrensschritt S8 angedeutet.

Sofern die gemessene Distanz D_{N}(α_{N}) kleiner ist als der initialisierte Wert Dᵢ(α_{N}), liegt ein Fehler vor. Dieser Fehler wird mit einem Zeitstempel versehen. Dies ist durch Verfahrensschritt S9 angedeutet.

Anschließend wird der Fehler als Fehlermeldung F im Register 1130 abgespeichert. Dies ist durch Verfahrensschritt S10 angedeutet.

Ferner überprüft die Mess- und/oder Steuereinheit 1120, ob ein solcher Fehler F (T_{N}, α_{N}) zu einem vorherigen Zeitpunkt T_{N-1} schon einmal vorlag. Dies ist durch Verfahrensschritt S11 angedeutet.

Sofern dies der Fall ist, wird der entsprechende Zeitstempel T_{N-1} des vorherigen Fehlers F (T_{N-1}, α_{N}) abgefragt. Dies ist durch Verfahrensschritt S12 angedeutet.

Abschließend entscheidet die Mess- und/oder Steuereinheit 1120 anhand eines Warnmeldekriteriums, ob eine Warnmeldung Wausgeben werden muss, die bspw. eine Blitzleuchte aktiviert. Bspw. wird hierfür eine Differenzzeit T_{D} aus den beiden Fehlermeldungen F (T_{N}, α_{N}) und F (T_{N-1}, α_{N}) ermittelt. Diese Differenzzeit T_{D} wird dann anschließend mit einer Totzeit T_{T} und einer Quittierungszeit T_{Q} verglichen. Die Totzeit T_{T} kann bspw. auf 20 Sekunden gesetzt werden, um kurzweilige Maßnahmen auszuschließen und die Quittierungszeit T_{Q} kann bspw. auf 2 Stunden gesetzt werden, um zu alte Fehlermeldungen auszuschließen. Dies ist durch Verfahrensschritt S13 angedeutet.

Sofern das Warnmeldekriterium erfüllt ist, wird eine Warnmeldung (W) ausgegeben, mittels derer bspw. eine Blitzleuchte im Lager aktiviert wird. Für den Fall einer Ausgabe einer Warnmeldung (W) wird diese auch in dem Register abgelegt, um für eine spätere Nachprüfung verifiziert werden zu können.

Es ist aber auch denkbar, dass die Warnmeldung (W) bspw. mittels der Mess- und/oder Steuereinheit an Personal im Lager versandt wird, bevorzugt umfassend Koordinaten, wo die Störung vorliegt. Dies kann bspw. über die vorstehend beschriebene Schnittstelle erfolgen, die bevorzugt als Kommunikationseinheit ausgebildet ist. Die Versendung der Meldung kann dabei bspw. wireless an eine Cloud, ein Mobiltelefon und/oder an den Betreiber des Lagers versandt werden.

### Bezuqszeichenliste

- 1000: Brandbekämpfungsanlage
- 1100: Vorrichtung zur Überwachung einer Lagerhöhe
- 1110: Rotationssensor
- 1112: Überwachungssegment
- 1120: Mess- und/oder Steuereinheit
- 1130: Register
- 1140: Blitzleuchte
- 1150: Schnittstelle
- 1160: Computerprogramm-Produkt
- 1200: Sprinkler
- 1300: Zentrale, insbesondere Sprinklerüberwachungszentrale
- 2000: Lager
- 2100: maximale Lagerhöhe
- 2120: vordefinierte, maximale Lagerhöhe
- 2200: Regal
- 2210: Regalhöhe
- 3000: Brandmelder- und/oder Löschsteuerzentrale
- A: Alarm
- D, Dᵢ, D_{N}: Distanz
- Dᵢ(αi), D_{N}(α_{N}): Distanzmessung
- Dᵢ: initialisierte Distanz
- D_{N-1}: vorherige Distanz
- D_{N}: aktuelle Distanz
- F: Fehlermeldung
- H: Hindernis
- R: Rotationsbewegung
- S₁, S₂, ..., S_{N}: Verfahrensschritte
- T_{N}, T_{N-1}: Zeitstempel
- T_{TOT}: Totzeit
- T_{MAX}: Maximalzeit
- Ü: Überschreitung
- V: vertikale Achse
- W: Warnmeldung
- α, α_{N}, α_{N-1}: Drehwinkel

## Patentansprüche

1. Vorrichtung (1100) zur Überwachung einer Lagerhöhe (2100) eines Lagers (2000), insbesondere eines Regallagers, bevorzugt eines Hochregallagers, umfassend wenigstens:
- einen Sensor (1110), der insbesondere dazu vorbereitet ist, in einem oberen Bereich des Lagers (2000) angeordnet zu werden, wobei
- der Sensor (1110) dazu eingerichtet ist:
- eine Distanzmessung (Dᵢ, D_{N}) einer im Wesentlichen zum Lager (2000) horizontalen Distanz (Dᵢ, D_{N}) auszuführen, die eine vordefinierte, maximale Lagerhöhe überwacht (2120), und
- eine Mess- und/oder Steuereinheit (1120), die dazu eingerichtet ist, im Falle einer durch den Sensor (1110) erkannten Überschreitung (Ü) der vordefinierten, maximalen Lagerhöhe (2120) eine Meldung (F,W) auszugeben.

2. Vorrichtung (1100) nach Anspruch 1, wobei
- der Sensor dazu eingerichtet ist, eine Laser-Distanzmessung ausführen.

3. Vorrichtung (1100) nach Anspruch 1 oder 2, wobei
- der Sensor ein Rotationssensor ist.

4. Vorrichtung (1100) nach einem der vorstehenden Ansprüche, wobei
- der Sensor (1110) wenigstens eine vertikale Achse (V) aufweist und ferner dazu eingerichtet ist, eine Rotationsbewegung (R) um die vertikale Achse (V) von wenigstens 90°, bevorzugt wenigstens 180°, besonders bevorzugt wenigstens 360°, auszuführen.

5. Vorrichtung (1100) nach einem der vorstehenden Ansprüche, wobei
- der Sensor wenigstens eine vertikale Achse (V) aufweist und ferner dazu eingerichtet ist, eine Rotationsbewegung (R) um die vertikale Achse (V) mit einer vorbestimmten Rotationsgeschwindigkeit auszuführen, wobei die Rotationsgeschwindigkeit etwa im Bereich von 1 bis 90 Umdrehungen pro Minute liegt.

6. Vorrichtung (1100) nach einem der vorstehenden Ansprüche, wobei
- die Mess- und/oder Steuereinheit (1120) ferner dazu eingerichtet ist, im Falle einer durch den Sensor (1110) erkannten Überschreitung (Ü) der vordefinierten, maximalen Lagerhöhe (2120) einen zur Meldung (F, W) dazugehörigen Zeitstempel (T_{N}, T_{N-1}) bereitzustellen.

7. Vorrichtung (1100) nach einem der vorstehenden Ansprüche wobei:
- die Mess- und/oder Steuereinheit (1120) mit einem Register (1130) gekoppelt ist, welches dazu eingerichtet ist, durch den Sensor (1110) erfasste Daten abzuspeichern, insbesondere um die Vorrichtung innerhalb des Lagers erstmalig zu initialisieren und außerdem oder alternativ um eine aktuelle Distanz D_{N} mit einer vorherigen Distanz D_{N-1} und außerdem oder alternativ mit einer initialisierten Distanz Dᵢ abzugleichen.

8. Vorrichtung (1100) nach Anspruch 5, wobei
- die Mess- und/oder Steuereinheit (1120) ferner dazu eingerichtet ist, mittels des Registers (1130) einen Alarm (A), insbesondere mittels einer im Lager befindlichen optische Alarmeinheit (1140), auszulösen und/oder ein Signal auszugeben.

9. Vorrichtung (1100) nach einem der vorstehenden Ansprüche ferner umfassend:
- eine optische Alarmeinheit, insbesondere eine Blitzleuchte (1140), die dazu eingerichtet ist, eine Meldung (F, W), bevorzugt eine Warnmeldung (W), der Mess- und/oder Steuereinheit innerhalb eines Lagers (2000) als optisch-sichtbaren Alarm (A) auszugeben.

10. Vorrichtung (1100) nach einem der vorstehenden Ansprüche, wobei die Mess- und/oder Steuereinheit (1120) ferner eine Kommunikationseinheit aufweist, die dazu eingerichtet ist, Daten an eine weitere Einrichtung, insbesondere eine Zentrale (1300) und/oder einen Computer und/oder einen Cloud-Server und/oder ein mobiles Endgerät zu übertragen.

11. Vorrichtung (1100) nach einem der vorstehenden Ansprüche ferner umfassend:
- ein durch die Mess- und/oder Steuereinheit (1120) ausführbares Computerprogramm-Produkt (1160), umfassend Befehle, die bei deren Ausführung auf einem Computer:
- den Sensor dazu veranlassen, die Distanzmessung auszuführen,
- eine erkannte Überschreitung (Ü) unter Verwendung wenigstens zweier Zeitstempel T1, T2) zu differenzieren, insbesondere nach Fehlermeldung (F) und Warnmeldung (W).

12. Brandbekämpfungsanlage (1000), insbesondere Wasserlöschanlage, für ein Lager, wenigstens umfassend einen Löschfluidauslass, insbesondere eine Düse und/oder einen Sprinkler (1200), und eine Vorrichtung nach einem der Ansprüche 1 bis 11.

13. Brandbekämpfungsanlage (1100) nach Anspruch 12 ferner umfassend:
- eine Zentrale, insbesondere eine Sprinklerüberwachungszentrale (1300) und/oder eine Brandmelder- und/oder Löschsteuerzentrale (3000) und/oder eine Störmeldezentrale die mit der Vorrichtung nach einem der Ansprüche 1 bis 11 verbunden ist, um einen Alarm auszulösen, insbesondere mittels einer Blitzleuchte.

14. Verwendung einer Vorrichtung (1100) zur Überwachung einer Lagerhöhe (2100) eines Lagers (2000) nach einem der Ansprüche 1 bis 11 in einer Brandbekämpfungsanlage (1000).

15. Zentrale einer Brandbekämpfungsanlage nach einem der vorstehenden Ansprüche, wobei der Zentrale insbesondere eine Sprinklerüberwachungszentrale (1300) und/oder eine Brandmelder- und/oder Löschsteuerzentrale (3000) und/oder eine Störmeldezentrale eine Vorrichtung nach einem der Ansprüche 1 bis 11 zugeordnet ist, um einen Alarm, eine Störung oder Warnung oder dergleichen auszulösen.
